(19) Europäisches Patentamt
European Patent Office
Office européen des brevets

(11) Publication number : 0 478 505 A2

(12) # EUROPEAN PATENT APPLICATION

(21) Application number : 91810745.9

(51) Int. Cl.$^5$ : D21C 5/02

(22) Date of filing : 23.09.91

(30) Priority : 26.09.90 GB 9020967
23.10.90 GB 9023076
23.10.90 GB 9023077

(43) Date of publication of application :
01.04.92 Bulletin 92/14

(84) Designated Contracting States :
AT BE CH DE DK ES FR GB IT LI NL SE

(71) Applicant : SANDOZ LTD.
Lichtstrasse 35
CH-4002 Basel (CH)
(84) BE CH DK ES FR GB IT LI NL SE

(71) Applicant : SANDOZ-PATENT-GMBH
Humboldtstrasse 3
W-7850 Lörrach (DE)
(84) DE

(71) Applicant : SANDOZ-ERFINDUNGEN
Verwaltungsgesellschaft m.b.H.
Brunner Strasse 59
A-1235 Wien (AT)
(84) AT

(72) Inventor : Cowman, John Stuart
12 Shay Crescent
Heaton, Bradford BD9 5PW (GB)

(54) **De-inking process.**

(57) A process for the de-inking of printed waste paper containing paper that is printed with ink containing hydrophilic binder resins (for example as in the flexographic process) comprising
a) pulping the waste paper at a pH of 4 to 7 in the presence of an ink collector chemical containing a hydrophobic portion and being cationic and water-soluble or sparingly water-soluble at a pH from 4 to 7 ;
b) applying to the resultant paper pulp a strong alkali to obtain a pH of 10-11 ; and
c) separating the detached printing ink particles from the fibre suspension of the paper pulp by flotation.
A cationic surfactant is preferably added at the same time as the ink collector chemical.
The invention permits the de-inking of mixed paper printed with both hydrophilic and hydrophobic inks.

EP 0 478 505 A2

This invention relates to a process for the de-inking of printed waste paper.

In particular, this invention relates to such a process in which waste paper is treated in a pulper at alkaline pH values,and may optionally be treated with alkali silicate, oxidatively active bleaching agents, fatty acids and or resinic acids containing more than 10 carbon atoms and dispersing agents. Such a process also includes the separation of the detached printing ink particles from the fibrous material suspension by a mechanism of air flotation, in a specially designed flotation cell. This process is commonly referred to as flotation de-inking.

Traditionally, newspapers have been printed with inks which are hydrophobic in nature, and these comprised carbon black, hydrophobic binder resins, oils and organic solvents.

This type of ink is used in printing processes such as letterpress and lithography (sometimes referred to as offset or web offset). The latter has largely replaced letterpress printing for large-circulation newspapers.

Newspapers and magazines (PAMS), printed with hydrophobic inks must be chemically treated during pulping to separate the carbon black particles from the paper fibres. Water alone is not sufficient.

Recently, many newspapers have been printed by a process known as flexography (flexo). The inks used for this flexo process differ markedly from the traditional inks in that they comprise carbon black and water-soluble or alkali-soluble acrylic resins (usually the acrylate/acrylic acid copolymer type).

Although the acrylic binder resins dry to give a good rub fast print, they can easily be dissolved in water and/or dilute alkali when the newspaper is pulped during recycling. Alkali accelerates this removal. The dissolution of resin facilitates the detachment of carbon black particles from the paper fibers.

These particles are very small in size (4 μm or less) and they possess a high anionic charge, due to the adsorption of the acrylic binder resins. Unlike traditional inks, which generate hydrophobic particles ranging in size from 10 to 100 μm during pulping, flexo ink particles are hydrophilic.

The standard method in the newspaper industry for removing offset litho type ink together with its binder resins (which render the print rub-proof) is by flotation. This is carried out at alkaline pH (10-11). In this environment, at a temperature of 40-50°C, the paper structure collapses very quickly, giving rapid wetting and fibre swell. The ink binder resins are saponified by the strong alkali, thereby releasing the ink particles into the suspension.

Fatty acids or fatty soaps are added to the suspension and form insoluble precipitates of calcium soaps (by reaction with $Ca^{2+}$ ions originating from chalk, present in the magazine waste, or by the controlled addition of calcium chloride). This precipitate adsorbs on to the surface of the ink particles, destabilises the particles and makes them even more hydrophobic.

Air bubbles are then introduced into the de-inking cell, and as they rise to the surface, they carry the hydrophobic ink particles up with them. The particles form a black scum on the surface, and this can then be removed by skimming or suction.

It is clear that the whole process of flotation is based on the hydrophobic nature of the inks. It is therefore not surprising that, when flexo printed newspapers are introduced into the traditional de-inking process, complete ink removal is made impossible by the hydrophilic nature of the flexo ink particles. This in turn leads to reduced brightness in the finished sheet of paper.

Papermakers with de-inking plants are very reluctant to accept flexo printed waste paper, but its inclusion in the recycling chain is almost inevitable.

According to the invention, there is provided a process for the de-inking of printed waste paper containing paper that is printed with ink containing hydrophilic binder resins (for example as in the flexographic process) comprising

a) pulping the waste paper at a pH of 4 to 7 in the presence of an ink collector chemical containing a hydrophobic portion and being cationic and water-soluble or sparingly water-soluble at a pH from 4 to 7;

b) applying to the resultant paper pulp a strong alkali to obtain a pH of 10-11; and

c) separating the detached printing ink particles from the fibre suspension of the paper pulp by flotation.

In process step a) the collector chemical can complex with anionic hydrophilic ink particles forming "flocs" and thereby increasing the size of the ink particles.

In process step b) the ink collector chemical loses its cationic charge and solubility, thereby rendering the ink flocs hydrophobic.

With this invention, the chemistry of the hydrophilic flexo inks is changed during the de-inking to correspond with that of conventional inks, thereby allowing the use of the normal flotation process for ink removal.

The de-inked waste paper can also be treated with a fatty acid or fatty acid soap, a dispersant, a sequesterant, an oxidatively active bleaching agent and alkali silicate to stabilize the bleaching liquor.

For purposes of the present invention, the term "de-inking" means the removal of printed ink from waste paper fiber suspensions.

In the de-inking process, cleaned fibres are reused for the manufacture of various qualities of paper, such as printing stock, sanitary papers, writing papers, and the like. It is important that, in the course of the de-inking

process, the printed waste papers are pulped with an addition of chemicals causing the printing inks (be they only offset printing inks or a mixture of offset litho and flexo printing inks) to become detached from the fibres. The detached printing inks are subsequently removed from the fibrous suspension through flotation, washing, or a combination of such processes. In both the flotation and the washing processes, the waste paper typically is pulped first in a acid-neutral environment and then in an alkaline environment, for example with the addition of one or more of sodium hydroxide, alkali silicate, hydrogen peroxide, a surfactant, a fatty acid or fatty acid soap and a sequestering agent.

The fibrous material is then cleaned in flotation cells by floating out the printing inks, or by use of a filter. The fibrous material is washed to remove the printing inks. This fibrous material may be recovered and then utilized in the production of paper.

The addition of alkali to the waste paper results in a swelling of the cellulose fibres and removes the hydrogen bridge bond, making possible easy disintegration of the waste paper.

Where mixed types of printed matter are de-inked, the alkali also functions to saponify resins which have been used as binders for the offset litho type print. The soaps cause a reduction in surface tension or interfacial tension, and assist in detaching the offset litho printing inks. In part, the soaps precipitate with the agents which cause the hardening of the water in the form of insoluble calcium soaps and attach to the printing inks, making them hydrophobic. In order to improve the detaching of the offset litho printing inks and the dispersion, use typically may also be made of non-ionic surfactants such as fatty alcohol polyglycol-ethers, fatty acid polyglycol-esters or alkylphenol polyglycol-ethers, which also aid in the development of foam in the flotation cells.

Hydrogen peroxide is an oxidatively-active bleaching agent generally used to prevent yellowing of the fibers which may result from the use of the alkali. Other chemicals such as sodium silicate and sequestering agents stabilize the bleaching liquor. Thus, the sequestering agents prevent rapid decomposition of the hydrogen peroxide by heavy metal ions such as copper, iron, manganese and the like.

If sequestering agents are used, they may be added in a quantity of up to 0.4%, by weight. Preferred sequestering agents are ethylenediaminetetraacetic acid (EDTA), diethylene-triaminepentaacetic acid (DTPA), diethylenetriamine-pentamethylenephosphonic acid (DTPMA) and nitrilotracetic acid (NTA) or their sodium salts.

The stock density of the waste paper in the pulper is from 2 to 20%, by weight and the temperature of the material in the pulper during processing is 20° to 80° C. Depending upon the intended use of the paper to be reprocessed, different qualities of waste paper are used, such as for newspaper, magazines, NCR (no carbon required) paper, labels and the like. In the event of a later use in sanitary papers, one tends to use newspaper with low ash content, whereas for later use in printing papers, one tends to use a waste paper mixture of newspapers and magazines at a ratio of 1:1.

In general, the degree of brightness (as measured on an "Elrepho" 2000 machine at a standard wavelength R457) of a waste paper mixture of newspapers and magazines in a ratio of 2:1 treated according to the invention is 55 to 65%.

Preferably in a process according to the invention, the printed waste paper comprises newspapers, magazines or any other printed matter, in which the printed waste contains hydrophobic and hydrophilic inks (as typified by the offset litho and flexo processes respectively).

The proportions of the various individual kinds of printed matter (offset news, flexo news, magazines and other printed matter) present in waste paper can range from total absence of the kind to 100% thereof.

A typical blend would be 30-70% offset news, 5-25% flexo news and 30-50% magazines.

The preferred composition is 50% offset news, 20% flexo news and 30% magazines.

The mixture is pulped preferably in a pulper at a consistency of 2-20%, preferably 4-8%, in water at a pH of 4-7 for 1-30 minutes, preferably 2-3 minutes, at a temperature of 20-80°C, preferably 40-50°C.

The treatment is usually sufficient to separate the flexo ink particles from the fiber, but not the offset ink particles. The ink collector chemical is then added at a dosage level of 0.1-1.0%, preferably 0.2-0.6% (based on active substance on dry fibre), to create "flocs" and increase the particle size of the inks.

An additive which may be added at the same time as the ink collector chemical and whose use leads to enhanced ink removal is at least one cationic surfactant. Preferred cationic surfactants for use in this invention shall further be described hereinunder. The cationic surfactants are added at a rate of 0.05-0.5 parts, preferably 0.1-0.2 parts, of surfactant per part of ink collector chemical.

Other traditional de-inking chemicals such as dispersant, NaOH, sodium silicate, sequesterant and hydrogen peroxide may then be added. Fatty acids or fatty acid soaps may also be added, depending on the ratio of flexo to offset news.

The strong alkali added to the treated pulp is preferably sodium hydroxide.

The alkaline environment nullifies the cationic charge of the ink collector chemical within the flexo ink flocs, reducing solubility and increasing hydrophobicity. Pulping is continued for 10 to 30 minutes.

The pulp is transferred to a flotation de-inking cell and diluted with water (at 40-50°C) to a consistency of 0.5-2%, preferably 1%. Flotation is continued for 10-15 minutes until all the floatable ink has been skimmed off.

The ink collector chemical may be selected from any compound which exhibits the characteristics hereinabove described. Preferred ink collector chemicals fall into one of two broad groups. A first group comprises substances which become water-insoluble and anionic or nonionic at pH above 7. A second group comprises ester groups on the hydrophobe. Thus, when the pH rises above 7, the chemicals of the first group become insoluble and this renders the ink floc hydrophobic. Chemicals of the second group are totally or partially saponified by the alkaline conditions, this producing in situ a fatty acid soap which acts as a de-inking chemical for flotation de-inking.

Preferred first group ink collector chemicals are of three types, namely:

**Type i)** the reaction product of a compound of formula I or Ia

$$R-COOH \qquad (I)$$

$$R-COOR_{30} \qquad (Ia)$$

in which R is $C_{8-22}$ alkyl or $C_{8-22}$ alkenyl and $R_{30}$ is $C_{1-4}$alkyl;
with a compound of formula II

$$H_2N-(CH_2)_a-NH-(CH_2)_b-R_{12} \qquad (II)$$

in which a and b independently are integers from 1 to 10 inclusive; $R_{12}$ is -OH, $-NH_2$, $-NH(C_{1-4}alkyl)$ or $-N(C_{1-4}alkyl)_2$ (preferably a is 2 or 3 and b is 2 or 3);

**Type ii)** a compound of formula IV to XII

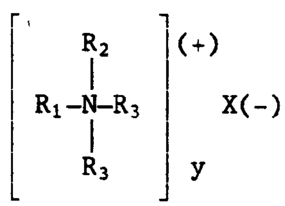

(IV)

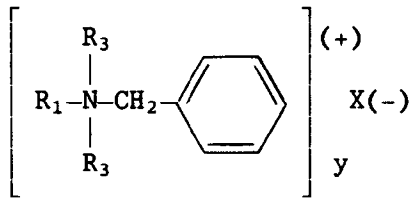

(V)

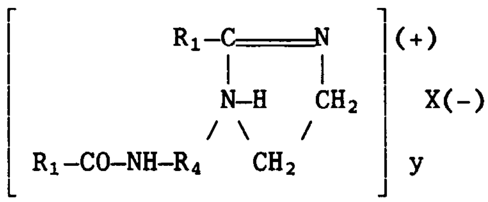

(VI)

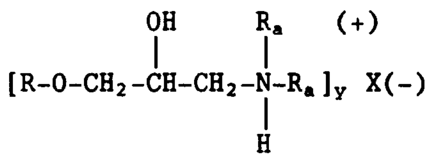

(VII)

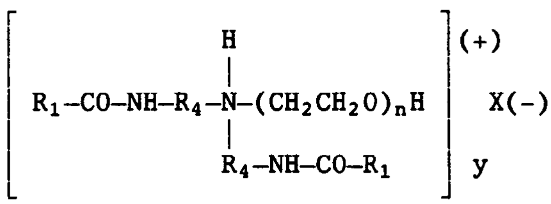

(VIII)

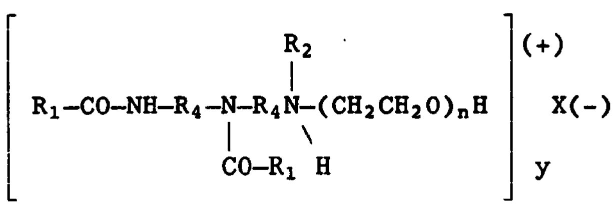

(IX)

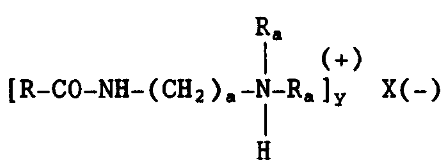

(X)

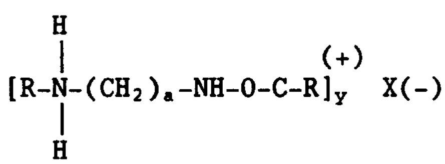

(XI)

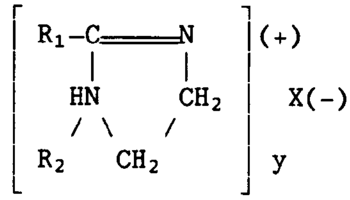 (XII)

in which $R_1$ is $C_{8-22}$alkyl or $C_{8-22}$alkenyl (preferably $C_{16-20}$alkyl or $C_{16-20}$alkenyl);
$R_2$ is $C_{1-3}$alkyl or hydrogen;
$R_3$ has a significance of $R_1$ or $R_2$ independently of $R_1$ or $R_2$ of which at least one $R_3$ is hydrogen;
$R_4$ is methylene or ethylene;
R is as defined above;
X is an anion (for example chloride, bromide, iodide, sulphate, $C_{1-4}$alkyl sulphate and acetate);
y is the valence value of X; and
n is an integer from 1 to 4 inclusive;
$R_a$ has the significance of R or $-(CH_2)_a-OH$ or $R_2$; and

**Type iii)** the reactive product of diethylene triamine, triethylene tetramine or tetraethylene pentamine with R-COOH.

The invention therefore provides a chemical compound adapted to be used in the de-inking of paper, selected from types i) to iii) hereinabove described.

Preferred compounds of type i) are those of formula XIII to XVI

$$[R\text{-}CO\text{-}NH(CH_2)_2\text{-}NH_2(CH_2)_2OH]^{(+)}X(-) \qquad (XIII)$$

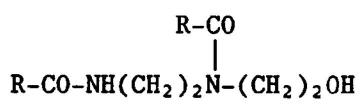 (XIV)

$$[R\text{-}CO\text{-}NH(CH_2)_2NH_2\text{-}(CH_2)_2O\text{-}CO\text{-}R]^{(+)}X(-) \qquad (XV)$$

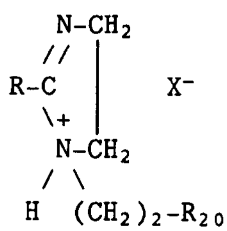 (XVI)

$X^-$ is an anion (such as acetate); $R_{20}$ is -OH or -O-CO-R and R is as defined above.

Preferably $R_{20}$ is -OH.

Preferably in type i), the compound of formula I or Ia is reacted with that of formula II in a molar ratio of 2:1 to 1:2 more preferably 1.4:1 to 1:1, most preferably about 1.4:1.

Preferably in compounds of type i), a) and b) are 2.

Preferably the ink collector chemical of the first group is a compound of type i).

Preferably R is R′ where R′ is $C_{12-22}$alkyl, more preferably $C_{15-10}$alkyl, most preferably stearyl.

In a preferred embodiment of the invention, certain of the ink collector chemicals may be adsorbed on to a particulate material and added to the waste paper pulp at stage (a). The particles can complex with anionic ink particles to form flocs, thereby increasing the size of the ink particles. The particulate material may be selected from any such material which is capable of adsorbing an ink collector chemical on to its surface. It may be organic or inorganic, naturally-occurring or synthetic and typical examples include clays, chalk, talc, bentonite, synthetic silicate, aluminosilicates, magnesium silicates and calcium silicates. The preferred particulate substance is talc (naturally-occurring magnesium silicate). This embodiment works slightly differently from the unadsorbed types I-III in that the flexo ink particles are adsorbed on to the particles, creating collector/ink "flocs",

but the effect is the same - an increase in ink particle size.

All of the ink collector chemicals of types i) to iii) may be used in conjunction with the particulate material. The invention therefore provides a composition of matter adapted to be used in the de-inking of paper, comprising a compound selected from types i) to iii) adsorbed on to a particulate substrate.

The second group of ink collector chemicals comprises a hydrophobic portion with ester linkages. Preferred second group ink collector chemicals are again of three types.

**Type iv)** the reaction product of a compound of formula I, Ia or XVII

$$R\text{-}COOH \qquad (I)$$

$$R\text{-}COOR_{30} \qquad (Ia)$$

$$RCOCl \qquad (XVII)$$

in which R is $C_{8-22}$ alkyl or $C_{8-22}$ alkenyl and $R_{30}$ is $C_{1-4}$alkyl;
with a compound of formula XVIII

$$[OH(CH_2)_b]_3N \qquad (XVIII)$$

in which b is an integer from 1 to 10;

**Type v)** the reaction product of a compound of formula I with a compound of formula XIX

$$HO\text{-}(CH_2)_b\text{-}NR_7R_8 \qquad (XIX)$$

where $R_7$ and $R_8$ independently are selected from hydrogen, $c_{1-22}$alkyl and $(CH_2)_bOH$; and

**Type vi)** a compound of formula XX to XXIII

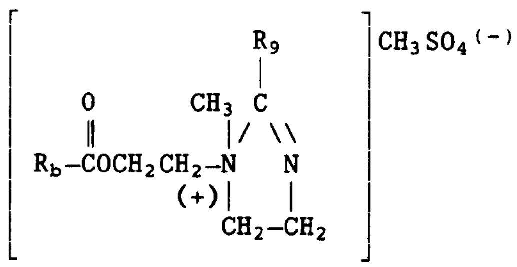

(XX)

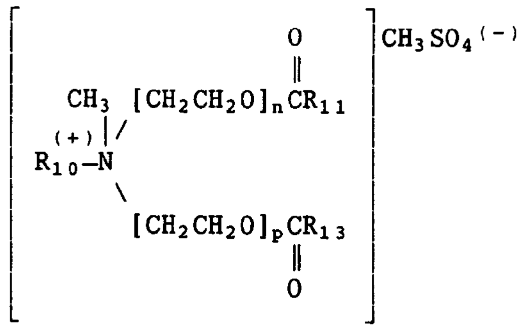

(XXI)

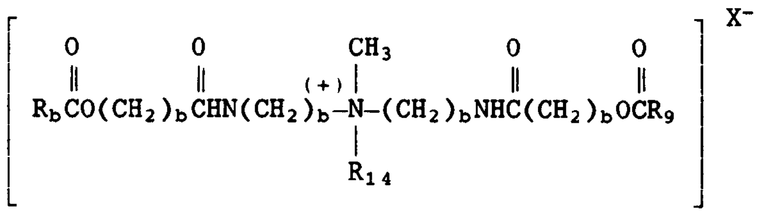

(XXII)

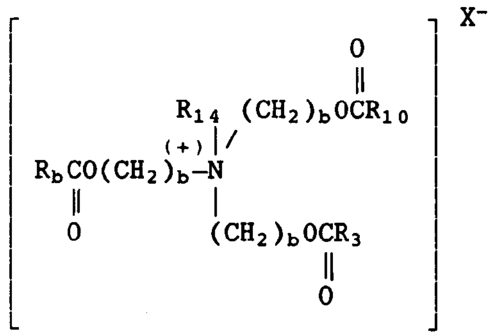

(XXIII)

in which $R_9$, $R_{10}$, $R_{11}$, $R_{13}$ independently are selected from $C_{8-22}$alkyl and $C_{8-22}$alkenyl; b, n and p independently are integers from 1-10 inclusive

where $R_b$ and $R_9$ independently are $C_{8-22}$alkyl;

$R_{14}$ is hydrogen or $C_{1-4}$alkyl or $CH_2$-$C_6H_5$;

$X^-$ is an anion such as $CH_3SO_4^-$, halide or acetate.

The invention therefore provides a chemical compound adapted to be used in the de-inking of paper, selected from types iv) to vi) hereinabove described.

Preferably the reaction product of compounds of formula I, Ia or XVII and XVIII is a product of formula XXIV

$$[R\text{-}CO\text{-}O(CH_2)_b]_2\text{-}N\text{-}(CH_2)_b\text{-}OH \qquad (XXIV)$$

Product XXIV is preferably further reacted with a quaternising agent such as $(CH_3)_2SO_4$, $CH_3X_1$ or $PhCH_2X_1$, where $X_1$ is halogen and Ph is phenyl, to give a product of formula XXV

$$\overset{A^-}{[R\text{-}CO\text{-}O(CH_2)_b]_2\text{-}N^+(CH_3)\text{-}(CH_2)_b\text{-}OH} \qquad (XXV)$$

where $A^-$ is the anion of the quaterising agent, e.g. $CH_3SO_4$-.

The reaction product of compounds of Formula I and XIX is preferably a product of formula XXVI

$$R\text{-}CO\text{-}O(CH_2)_b\text{-}NR_7R_8 \qquad (XXVI)$$

Reaction product XXVI is preferably further reacted with a quaternising agent such as $(CH_3)_2SO_4$, $CH_3X_1$, or $PhCH_2X_1$, where $X_1$ is halogen, to give a product of formula XXVII

$$[R\text{-}CO\text{-}O\text{-}(CH_2)_b\text{-}N^+(CH_3)R_7R_8]\ A^- \qquad (XXVII)$$

where Ph = $C_6H_5$.

Preferably the ink collector chemical of the second group is a compound of type iv).

Type iv) is preferably a compound of formula XXV.

Preferably in a type iv) compound, the compound of formula I, Ia or XVII is reacted with that of formula XVIII in a molar ratio of 3:1 to 1:1, more preferably 1.5:1 to 2.5:1, most preferably about 2.0:1.

Preferably in type iv) b is 2, R is $C_{12-22}$alkyl, more preferably $C_{15-19}$alkyl, most preferably stearyl.

The cationic surfactants for use in this invention may be chosen from the wide range of such compounds available to the art. Preferred cationic surfactants are compounds having the formulae XXVIII-XXXVI.

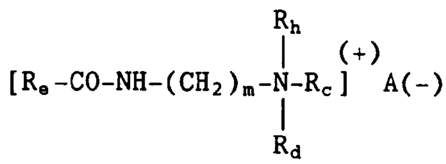

(XXVIII)

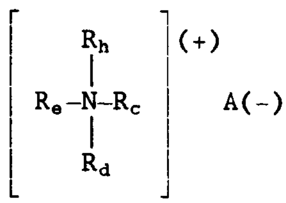

(XXIX)

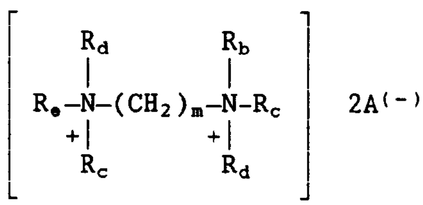

(XXX)

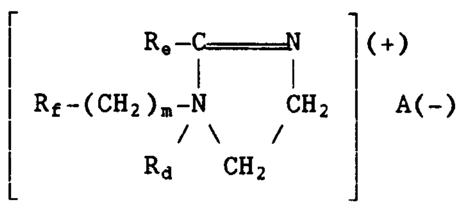

(XXXI)

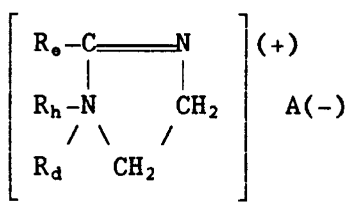

(XXXII)

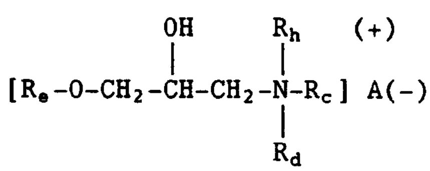

(XXXIII)

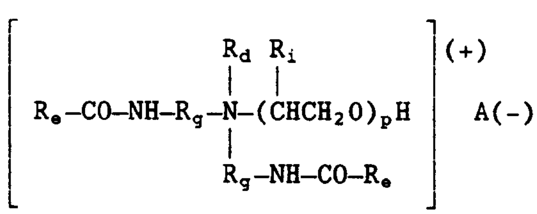

(XXXIV)

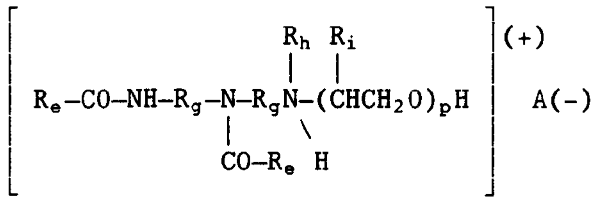

(XXXV)

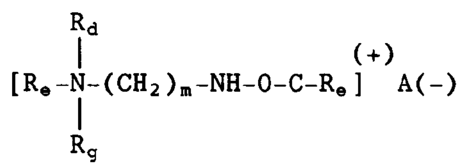

(XXXVI)

where Re is $C_{8-22}$alkyl or $C_{8-22}$alkenyl;
$R_c$, $R_h$ are independently $C_{1-4}$alkyl;
$R_c$, $R_g$ are independently $C_{1-4}$alkyl and benzyl;
$R_f$ is OH or OC(O)$R_e$;
$R_i$ is H or $CH_3$;
m is an integer from 1 to 4;
p is an integer from 1 to 2; and
A is the anion of the quaternising agent (typically halide or sulphate).

A major advantage of this invention is that it permits the de-inking of waste paper which is a mixture of papers containing both hydrophilic and hydrophobic inks. There is therefore also provided a process of de-inking waste paper comprising both hydrophilic and hydrophobic inks, comprising subjecting the waste paper to a de-inking process as herein-above described.

The invention will now be illustrated by the following examples, in which all temperatures are in degree C.

**Example 1**

In a 1000 ml reaction flask equipped with stirrer, thermometer distillation column, condenser and vacuum receiver are loaded 481.3g stearic acid flake.

An isomantle is installed underneath the flask and heat applied until the external flask temperature reached 100°C. Once all the stearic acid has melted, the stirrer is started.

With an internal flask temperature of 90°C, 108.5 g of N-hydroxyethylethylenediamine is added and the mix heated to 160°C over 4 hours. During this period, water formed by the reaction is allowed to distill over at atmospheric pressure and is collected in the receiver. At 160°C, the reaction is left stirring at this temperature for 8 hours, after which time vacuum was applied to 40 Torr and the reaction continued for a further 5 hours. The reaction mixture, in the form of a molten wax, is cooled to 90°C. The yield of product is 540g.

In order to convert the molten wax into a liquid emulsion, 480.7g water and 5.3g acetic acid (98%) are loaded into a clean empty flask and heated to 80°C. 54g of molten product from above (at 90°C) is added slowly to the hot water with stirring. The resulting emulsion is cooled to 40°C and 1.2g of sodium acetate powder is sprinkled into the mix to act as a viscosity modifier (keeping the emulsion fluid).

A yield of 540g of the final product is obtained. This contains 10% active constituents and the pH is 4.5. It is hereinafter referred to as a "collector".

**Example 2**

In a 2000 ml laboratory pulper, 1920 ml of water at 50°C and 0.48g of the collector of Example 1 are loaded. Waste paper totaling 80g is added comprising 16 g flexo printed news, 40 g offset litho printed news and 24 g PAMS (periodicals and magazines).

The mixture is pulped for 2 to 3 minutes and then 6.75 g of 10% NaOH (0.84% based on the weight of waste paper) followed by 0.48 g "Serfax" (trade mark) S 100 soap (0.6%). Pulping is continued for a further 10 minutes at 50°C.

The pulp is then transferred to a laboratory flotation de-inking cell containing 10,000 ml water at 50°C. After

mixing in, the cell is topped up with water to a total volume of 16,000 ml. The stock is circulated with a stirrer-/pump which allows air to be injected under the surface. Calcium chloride solution is added to give a hardness of 220 ppm (as $CaCO_3$). The black particles of ink begin rising to the surface with foam and are removed by skimming.

The de-inking is carried out over a 15 minute period at 45-50°C and after that time, very little ink remains in the stock and the fiber loss (skimmed off with the ink) is low. The thin stock (ca. 0.5% solids) is run off from the bottom of the cell and thickened, by filtering on a tower sheet former, to a consistency of 10%.

200 g of thickened stock are placed in a polythene bag and bleached by adding 2% sodium silicate, 0.2% DTPA, 0,5% NaOH (to pH 10.5) and 1.0% hydrogen peroxide (all percentages being based on the weight of dry fiber).

The polythene bag is sealed and kneaded (to mix the chemicals with the stock thoroughly) then placed in a water bath at 60°C for 2 hours. The stock is then diluted with water to 2% consistency and the pH adjusted to 5.5 with dilute sulphuric acid.

Paper sheets, made from this bleached stock by conventional methods, are found to a brightness level of 62.2 when measured using an "Elrepho" 2000 machine at a standard wavelength of R457.

**Example 3**

The procedure for Example 2 is repeated but without the collector.

Brightness of the finished sheet of paper is measured as above and gives a value of 55.3

**Example 4**

In a 2000 ml laboratory pulper, 1920 ml of water at 50°C and 0.36 g of the collector of Example 1 are loaded. Waste paper totaling 80 g is added comprising 16 g flexo printed news, 40 g offset litho printed news and 24 g PAMS. The mixture is pulped for 2 to 3 minutes.

Further chemicals are then added, namely: 0.03 % oleyl polyglycol ester dispersant, 1.0% NaOH, 0.2% DTPA, 2.2% sodium silicate, 0.6% "Serfax" S 100 soap and 1.0% hydrogen peroxide. (All percentages are based on active constituents on the weight of waste paper.)

Pulping is continued for a further 10 minutes. The stock is transferred as before into a laboratory de-inking cell and the calcium level adjusted with calcium chloride to 220 ppm.

After 15 minutes,during which time all the floated ink is removed by skimming, the cleaned stock is emptied into a container. The pH of the thin stock (0.5% consistency) is adjusted to 5.5 with dilute sulphuric acid.

Paper sheets are made from this stock by conventional methods and the brightness levels are measured. The average value is 59.8 (R457).

**Example 5**

Example 4 is repeated, leaving out the collector. The average brightness is 54.2 (R457).

**Example 6**

Example 4 is repeated, leaving out the sodium silicate and replacing it with 0.3% of a commercial synthetic peroxide stabiliser ("Cartan" (trade mark) FD).

The average brightness is 60.7 (R457).

**Example 7**

Example 6 is repeated, leaving out the collector.

The average brightness is 54.9 (R457).

**Example 8**

In a 1000 ml reaction flask equipped with stirrer, thermometer distillation column, condenser and vacuum receiver is loaded 568g stearic acid flake (2.0 moles).

An isomantle is installed underneath the flask and heat applied until the external flask temperature reaches 100°C. Once all the stearic acid has melted, the stirrer is started and 5.6 g phosphorous acid ($H_3PO_3$) added. With an internal flask temperature of 90°C, 150 g of triethanolamine 99% (1.0 mole) is added and the mix heated

to 175°C over 4 hours. During this period, water formed by the reaction is allowed to distill over at atmospheric pressure and is collected in the receiver. At 175°C, the reaction is left stirring at this temperature for 2 hours, after which time vacuum is applied to 30 Torr and the reaction continued for a further 6 hours. The reaction mixture, in the form of a molten wax and having an acid value of < 5 is cooled to 80°C. The product is now quaternised by adding slowly over 2 hours, 119.6 g dimethyl sulphate (0.95 moles). After stirring for 2 hours the yield is 799 g of product.

In order to convert the molten wax into a liquid emulsion, 486 g deionised water is loaded into a clean empty flask and heated to 80°C. 54 g of molten product from above (at 80°C) are added slowly to the hot water with stirring. The resulting emulsion is cooled to 40°C and 1.2 g of sodium acetate powder is sprinkled into the mix to act as a viscosity modifier (thereby keeping the emulsion fluid).

A yield of 540 g of ink collector is obtained, containing 10% active constituents.

## Example 9

In a 2000 ml laboratory pulper, 1920 ml of water at 50°C is loaded. Waste paper totalling 80 g is added comprising 16 g flexo printed news, 40 g offset litho printed news and 24 g PAMS (periodicals and magazines).

The mixture is pulped for 2 to 3 minutes and then 0.6% of the collector of Example 8 is added. Further chemicals are then added namely; 0.03% oleyl polyglycol ester dispersant, 1.0% NaOH, 0.2% DTPA, 2.2% sodium silicate, and 1.0% Hydrogen peroxide. (All percentages are based on active contituents on the weight of waste paper). Pulping is continued for a further 10 minutes.

The stock is transferred to a laboratory de-inking cell containing 10 litres of water at 50°C. After mixing in, the cell is topped up with water to a total volume of 16 litres. The stock is circulated with a stirrer/pump which allows air to be injected under the surface. The calcium level is adjusted with calcium chloride to 220 ppm (as $CaCO_3$). After 15 minutes, during which time all the floated ink is removed by skimming, the cleaned stock is emptied into a container. The pH of the thin stock (0.5% consistency) is adjusted to 5.5 with dilute sulphuric acid. Paper sheets (ca. 100 gsm) are made from this stock on a conventional laboratory sheet former without further dilution with water. After pressing and drying (at 90°C), the brightness levels of the sheets are measured using an Elrepho 2000. A mean value from 6 sheets is recorded.

In this example, the brightness (R457) is 60.2.

## Example 10

The process of Example 9 is repeated, replacing the collector of Example 8 with 0.6% "Serfax" S 100 (a sodium stearate soap). The average brightness (R457) is 53.4.

## Example 11

The process of Example 9 is repeated, replacing solium silicate with 0.4% "Cartan" (trade mark) FD (a synthetic hydrogen peroxide stabiliser). The brightness (R457) is 60.6.

## Examples 12-19

Example 9 is repeated varying the amounts of the collector of Example 8, "Serfax" S 100, sodium silicate and "Cartan" FD as shown.

| Example No. | Collector | "Serfax" S 100 | Sodium silicate | "Cartan" FD | Brightness (R457) |
|---|---|---|---|---|---|
| 12 | 0.3% | 0.3% | 2.2% | - | 58.9 |
| 13 | 0.4% | 0.2% | 2.2% | - | 60.1 |
| 14 | 0.5% | 0.1% | 2.2% | - | 60.2 |
| 15 | 0.2% | 0.4% | 2.2% | - | 56.8 |
| 16 | 0.2% | 0.4% | - | 0.4% | 57.7 |
| 17 | 0.5% | 0.1% | - | 0.4% | 60.5 |
| 18 | 0.4% | 0.2% | - | 0.4% | 60.3 |
| 19 | 0.3% | 0.3% | - | 0.4% | 59.1 |

## Example 20

Into a clean 1 litre beaker are added 600 g deionised water and 75 g of the compound of Example 1. A high speed/high shear Silverson mixer is used to agitate the mix. With the mixer creating strong turbulence, 75 g of "Mistron Superfrost" (trade mark) talc is slowly added. The pH is adjusted to 5.0 with 2.0 g acetic acid (98%). The slurry is then milled using a laboratory bead mill until the particle size is <20 microns.

The finished slurry has a yield of 752 g, a pH of 5.0 and a dry content of 10.9%.

## Example 21

Into a 2000 ml laboratory pulper, 1920 ml of water at 50°C is loaded. Waste paper totalling 80 g is added comprising 16 g flexo printed news, 40 g offset litho printed news and 24 g PAMS (periodicals and magazines).

The mixture is pulped for 2 to 3 minutes and then 1.0% of the slurry of Example 20 is added. Further chemicals are then added, namely: 0.03% oleyl polyglycol ester dispersant, 1.0% NaOH, 0.2% DTPA, 2.2% sodium silicate and 1.0% hydrogen peroxide. (All percentages are based on active constituents on the weight of waste paper.) Pulping is continued for a further 10 minutes.

The stock is transferred into a laboratory de-inking cell, containing 10 litres water at 50°C. After mixing in, the cell is topped up with water to a total volume of 16 litres. The stock is circulated with a stirrer/pump which allows air to be injected under the surface. The calcium level is adjusted with calcium chloride to 220 ppm (as $CaCO_3$). After 15 minutes, during which time all the floated ink is removed by skimming, the cleaned stock is emptied into container. The pH of the thin stock is emptied into a container. The pH of the thin stock (0.5% consistency) is adjusted to 5.5 with dilute sulphuric acid.

Paper sheets (ca. 100 gsm) are made from this stock on a conventional laboratory sheet former without further dilution with water. After pressing and drying (at 90°C), the brightness levels of the sheets are measured using an Elrepho 2000. A mean value from 6 sheets is recorded.

In this example, the brightness (R457) is 61.3.

## Example 22

The procedure for Example 21 is repeated, replacing the slurry of Example 20 with 0.6% "Serfax" S 100.

The average brightness (R457) is 53.4.

## Example 23

The procedure for Example 21 is repeated, replacing sodium silicate with 0.4% "Cartan" FD (a synthetic hydrogen peroxide stabiliser).

The brightness (R457) is 60.8.

**Examples 24-31**

Example 21 is repeated, using the amounts of slurry according to Example 20, sodium silicate and "Cartan" FD shown below.

| Example No. | Final Product | Sodium silicate | "Cartan" FD | Brightness (R457) |
|---|---|---|---|---|
| 24 | 0.3% | 2.2% | - | 57.2 |
| 25 | 0.4% | 2.2% | - | 58.1 |
| 26 | 0.5% | 2.2% | - | 59.0 |
| 27 | 0.6% | 2.2% | - | 59.8 |
| 28 | 0.3% | - | 0.4% | 57.7 |
| 29 | 0.4% | - | 0.4% | 58.5 |
| 30 | 0.5% | - | 0.4% | 59.8 |
| 31 | 0.6% | - | 0.4% | 60.2 |

**Example 32**

1920 ml of water at 50°C is placed in a 2000 ml laboratory pulper. Waste paper totaling 80 g is added comprising 56 g offset litho printed news and 24 g PAMS (periodicals and magazines).

The mixture is pulped for 2 to 3 minutes and then 0.6% of the slurry of Example 20 is added. Further chemicals are then added, namely: 0.03 % oleyl polyglycol ester dispersant, 1.0% NaOH, 0.2% DTPA, 2.2% sodium silicate and 1.0% hydrogen peroxide. (All percentages are based on active constituents on the weight of waste paper.)

Pulping is continued for a further 10 minutes. The stock is transferred into a laboratory de-inking cell containing 10 litres of water at 50°C. After mixing in, the cell is topped up with water to total of 16 litres. The stock is circulated with a stirrer/pump which allow air to be injected under the surface. The calcium level is adjusted with calcium chloride to 220 ppm (as $CaCO_3$).

After 15 minutes, during which time all the floated ink is removed by skimming, the cleaned stock is emptied into a container. The pH of the thin stock (0.5% consistency) is adjusted to 5.5 with dilute sulphuric acid.

Paper sheets (ca. 100 gsm) are made from this stock on a conventional laboratory sheet former without further dilution with water. After pressing and drying (at 90°C), the brightness levels of the sheets are measured using an Elrepho 2000. A mean value from 6 sheets is recorded.

In this Example, the brightness (R457) is 61.6.

**Example 33**

Example 4 is repeated, replacing the slurry of Example 20 with 0.6% "Serfax" S 100 (a sodium stearate soap). The average brightness is 58.4 (R457).

## Claims

1. A process for the de-inking of printed waste paper containing paper that is printed with ink containing hydrophilic binder resins (for example as in the flexographic process) comprising
   a) pulping the waste paper at a pH of 4 to 7 in the presence of an ink collector chemical containing a hydrophobic portion and being cationic and water-soluble or sparingly water-soluble at a pH from 4 to 7;
   b) applying to the resultant paper pulp a strong alkali to obtain a pH of 10-11; and
   c) separating the detached printing ink particles from the fibre suspension of the paper pulp by flotation.

**2.** A process according to claim 1, wherein the ink collector chemical is insoluble and nonionic or anionic at pHs above 7.

**3.** A process according to claim 1 or claim 2, wherein the ink collector chemical is adsorbed on to a particulate mineral.

**4.** A process according to claim 1, wherein the hydrophobic portion comprises ester linkages.

**5.** A process according to any one of claims 1 to 4, wherein at least one cationic surfactant is added at the same time as the ink collector chemical.

**6.** A chemical compound adapted to be used in the de-inking of paper, selected from
**i)** the reaction product of a compound of formula I or Ia

$$R - COOH \qquad (I)$$

$$R\text{-}COOR_{30} \qquad (Ia)$$

in which R is $C_{8-22}$ alkyl or $C_{8-22}$ alkenyl and $R_{30}$ is $C_{1-4}$alkyl;
with a compound of formula II

$$H_2N - (CH_2)_a - NH - (CH_2)_b - R_{12} \qquad (II)$$

in which a and b independently are integers from 1 to 10 inclusive; $R_{12}$ is -OH, $-NH_2$, -NH($C_{1-4}$alkyl) or -N($C_{1-4}$alkyl)$_2$ (preferably a is 2 or 3 and b is 2 or 3);
**ii)** a compound of formula IV to XII

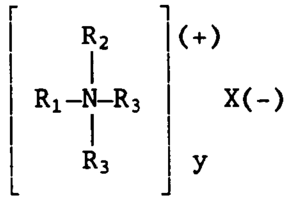

(IV)

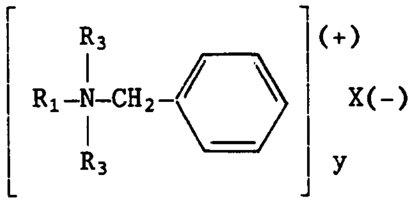

(V)

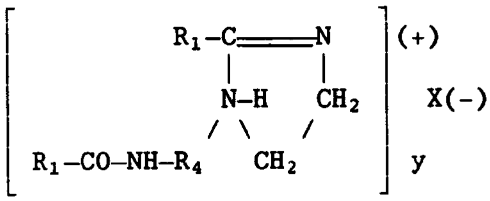

(VI)

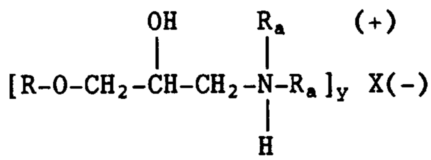

(VII)

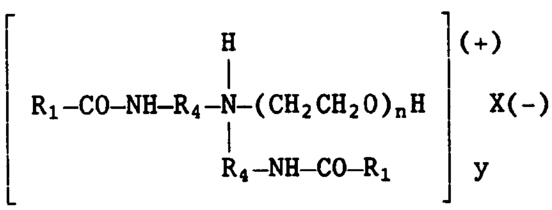

(VIII)

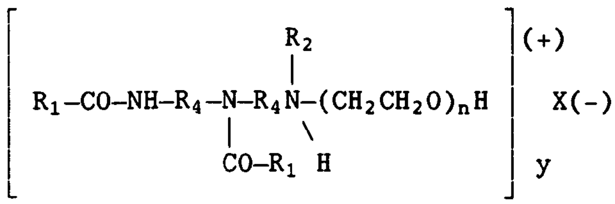 (IX)

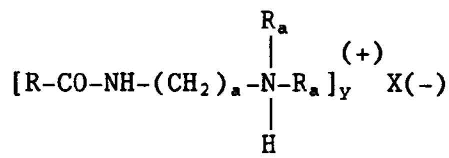 (X)

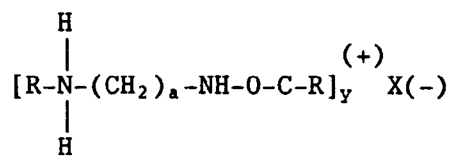 (XI)

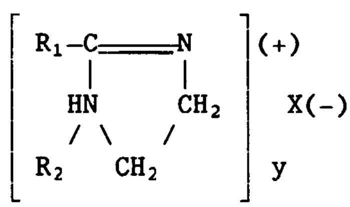 (XII)

in which $R_1$ is $C_{8-22}$alkyl or $C_{8-22}$alkenyl (preferably $C_{16-20}$alkyl or $C_{16-20}$alkenyl)
$R_2$ is $C_{1-3}$alkyl or hydrogen;
$R_3$ has a significance of $R_1$ or $R_2$ independently of $R_1$ or $R_2$ of which at least one $R_3$ is hydrogen;
$R_4$ is methylene or ethylene;
R is as defined above;
X is an anion (for example chloride, bromide, iodide, sulphate, $C_{1-4}$alkyl sulphate and acetate);
y is the valence value of X; and
n is an integer from 1 to 4 inclusive;
$R_a$ has the significance of R or $-(CH_2)_a$-OH or $R_2$; and
**iii)** the reactive product of diethylene triamine, triethylene tetramine or tetraethylene pentamine with R-COOH.

7. A chemical compound adapted to be used in the de-inking of paper, selected from
**iv)** the reaction product of a compound of formula I, Ia or XVII

R-COOH (I)

$R-COOR_{30}$ (Ia)

RCOCl (XVII)

in which R is $C_{8-22}$ alkyl or $C_{8-22}$ alkenyl and $R_{30}$ is $C_{1-4}$alkyl with a compound of formula XVIII

$[OH(CH_2)_b]_3N$ (XVIII)

in which b is an integer from 1 to 10;
**v)** the reaction product of a compound of formula I with a compound of formula XIX

$HO-(CH_2)_b-NR_7R_8$ (XIX)

where $R_7$ and $R_8$ independently are selected from hydrogen, $C_1$-$C_{22}$alkyl and $(CH_2)_bOH$; and
**vi)** a compound of formula XX to XXIII

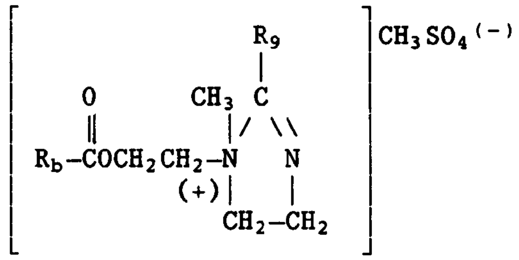

(XX)

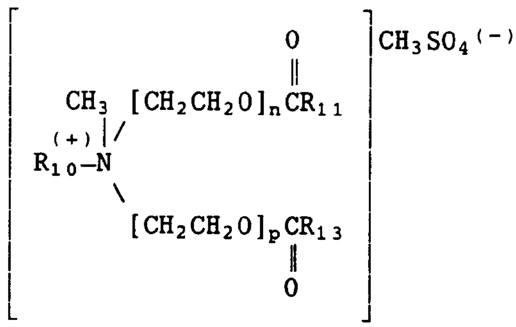

(XXI)

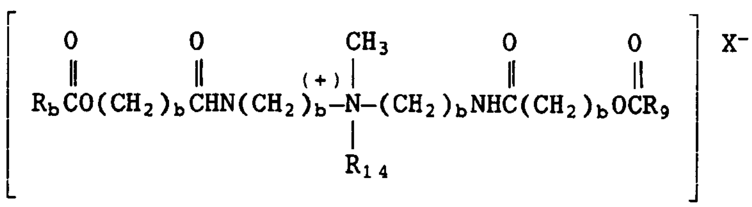

(XXII)

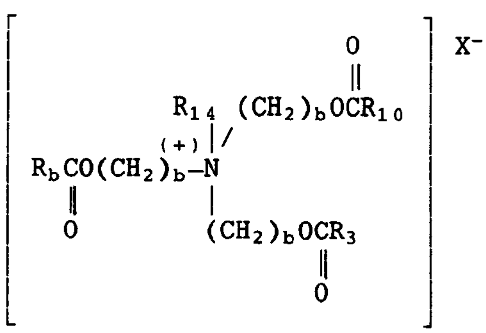

(XXIII)

in which $R_9$, $R_{10}$, $R_{11}$, $R_{13}$ independently are selected from $C_{8-22}$alkyl and $C_{8-22}$alkenyl; b, n and p independently are integers from 1-10 inclusive
where $R_b$ and $R_9$ independently are $C_{8-22}$alkyl;
$R_{14}$ is hydrogen or $C_{1-4}$alkyl or $CH_2$-$C_6H_5$;
$X^-$ is an anion such as $CH_3SO_4^-$, halide or acetate.

8. A process according to claim 5, wherein the cationic surfactant is selected from the group consisting of compounds of formulae XXVIII-XXXVI

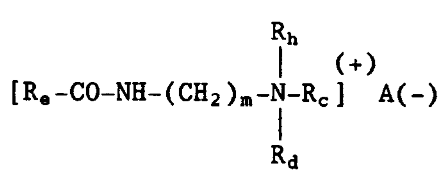

(XXVIII)

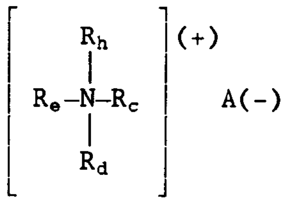

(XXIX)

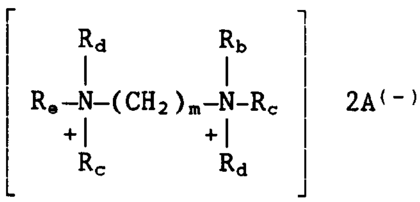

(XXX)

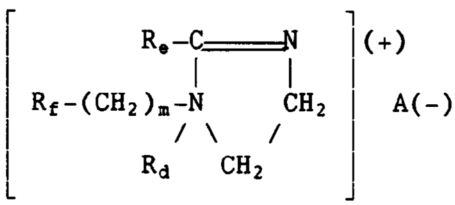

(XXXI)

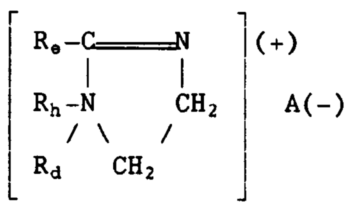

(XXXII)

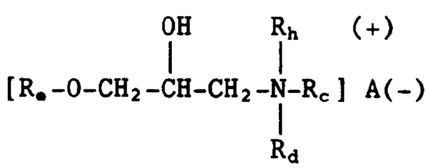

(XXXIII)

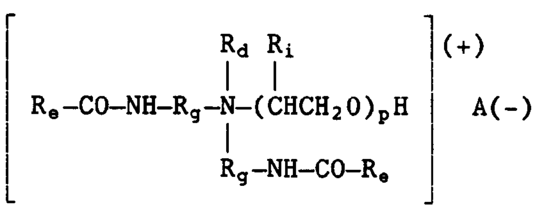

(XXXIV)

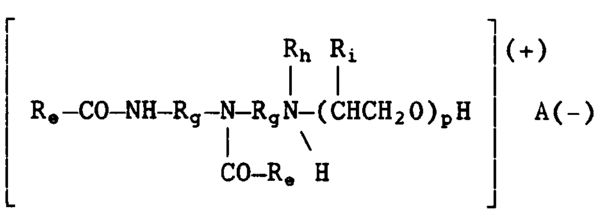

(XXXV)

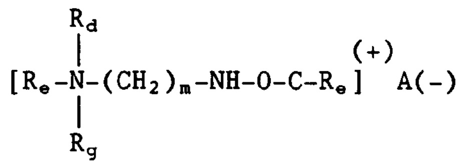

(XXXVI)

where $R_e$ is $C_{8-22}$alkyl or $C_{8-22}$alkenyl;
$R_c$, $R_h$ are independently $C_{1-4}$alkyl;
$R_d$, $R_g$ are independently $C_{1-4}$alkyl and benzyl;
$R_f$ is OH or $OC(O)R_e$;
$R_i$ is H or $CH_3$;
m is an integer from 1 to 4;
p is an integer from 1 to 2; and
A is the anion of the quaternising agent.

**9.** A composition of matter adapted to be used in the de-inking of paper, comprising a compound according to claim 5 adsorbed on to a particulate material.

**10.** A process of de-inking waste paper comprising both hydrophilic and hydrophobic inks, comprising subjecting the waste paper to a process according to claim 1.